# EUROPEAN PATENT APPLICATION

(11) **EP 3 138 763 A1**
(43) Date of publication of application: **08.03.2017**
(21) Application number: 15183682.2
(22) Date of filing: 03.09.2015
(51) Int. Cl.: B62J 1/00

(54) **BICYCLE SEAT**

(71) Applicant: Portz, Lyle, Kelowna, British columbia V1W 4V1 (CA)
(72) Inventor: Portz, Lyle, Kelowna, British columbia V1W 4V1 (CA)
(74) Representative: Gulde & Partner

(57) **Abstract**

An apparatus (10) and method for supporting a bicycle rider. The apparatus comprises an elongate central member (12) and first and second independently biased members (30,32) each located to a lateral side of the central member. The method comprises providing an elongate central member and biasing first and second members to lateral sides of the central member.

## Description

### BACKGROUND OF THE INVENTION

### 1. Field of Invention

The present invention relates to bicycle seats in general and in particular to a method and apparatus for independently supporting each side of a user on a bicycle.

### 2. Description of Related Art

Bicycles are a common form of transportation for many people. In a conventional or upright form, a user sits upon a seat or saddle located at a distance above and between the two wheels and grasps a handlebar connected to the front wheel with his or her hands.

Traditionally, bicycle seats are formed of a unitary support member having a forward or nose portion which is narrowed to fit between a user's legs and a widened rear portion for supporting the buttocks of the user. The forward portion may be utilized by the user to provide stability while riding as well as to leverage against during peddling to increase peddling power. Padding or suspension is often provided to the unitary seat to improve rider comfort.

One difficulty experienced by many bicycle riders is that conventional bicycles can exert pressure on their perineum which may reduce blood flow leading to erectile dysfunction or numbness. Previous attempts to reduce this pressure on the perineum of the user have been to replace a conventional seat with a pair of seating pads which are each placed under one side of the buttocks of the user. An example of such seats is provided in US Patent No 560,698 to Dyer. Disadvantageously, such seats do not provide any lateral stability to the rider which may reduce the stability that the rider may have as well as the power that the user may exert on the pedals.

### SUMMARY OF THE INVENTION

According to a first embodiment of the present invention there is disclosed an apparatus for supporting a bicycle rider comprising an elongate central member and first and second independently biased members each located to a lateral side of the central member.

The first and second biased members may have a curved top surface. The top surface of the first and second biased members may be higher than a top surface of the central member. The first and second biased members may have an s-shaped profile. The first and second biased members may have a c-shaped profile. The first and second biased members may be formed of a material selected from the group consisting of metal, carbon fibre or plastic. The first and second biased members may include a padded member on a top surface thereof.

The apparatus may further comprise a base member for connecting the first and second biased members to the central member. The base member may comprise a transverse member.

The central member may include at least one connecting member extending along a bottom surface thereof, the at least one connecting member being selectably connectable to a bicycle post along a length of the at least one connecting member. The at least one connecting member may comprise a pair of spaced apart rods. The central member may have a width of between **1** and **4** inches. The central member may have a padded layer therearound.

According to a further embodiment of the present invention there is disclosed a method for supporting a bicycle rider comprising providing an elongate central member and biasing first and second members to opposed lateral sides of the central member.

Other aspects and features of the present invention will become apparent to those ordinarily skilled in the art upon review of the following description of specific embodiments of the invention in conjunction with the accompanying figure s.

### BRIEF DESCRIPTION OF THE DRAWINGS

In drawings which illustrate embodiments of the invention wherein similar characters of reference denote corresponding parts in each view,
- Figure **1**: is a perspective view of an apparatus according to a first embodiment of the present invention.
- Figure **2**: is a side view of one of the biased side supports of the apparatus of Figure **1**.
- Figure **3**: is a cross-sectional view of the apparatus of Figure **1** as taken along the line **1-1**.
- Figure **4**: is a rear view of the apparatus of Figure **1**.
- Figure **5**: is a rear view of the apparatus of Figure **1** with one of the padded members being located above the biasing one of the biased members.
- Figure **6**: is a side view of one of the biased side supports of the apparatus of Figure **1**.
- Figure **7**: is a side view of one of the biased side supports of the apparatus of Figure **1** according to a further embodiment of the present invention.
- Figure 8: is a bottom view of the apparatus of Figure **1**.

### DETAILED DESCRIPTION

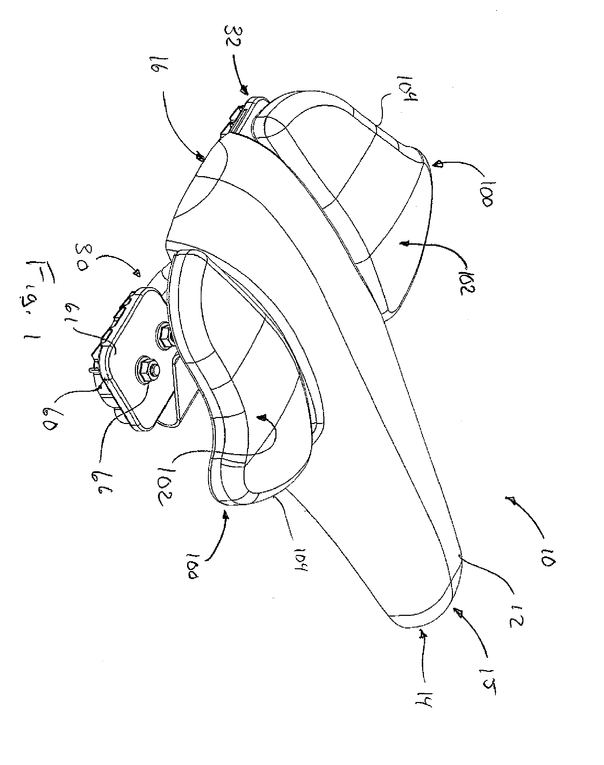

Referring to Figure **1**, an apparatus for supporting a bicycle rider according to a first embodiment of the invention is shown generally at **10**. The apparatus **10** comprises a central member **12** extending along a length which is adapted to correspond to the length of a bicycle (not shown) as is conventionally known. The apparatus **10** includes first and second side biased members **30** and **32**, respectively located to each side of the central member **12**.

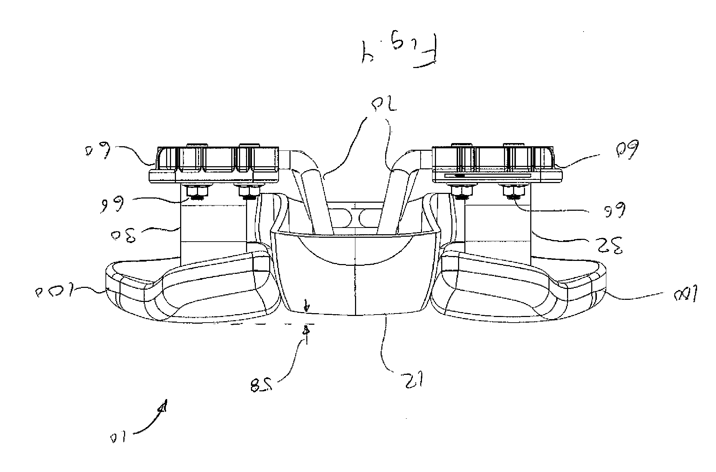

The central member **12** comprises an elongate member extending between front and rear ends, **14** and **16**, respectively with forward and rear portions **15** and **17**, respectively proximate thereto. The central member has a shape adapted to fit between the legs of a rider and may have a length of between **6** to **10** inches (**152** and **254** mm) between the front and rear ends **14** and **16** and a width of between **1** and **4** inches (**25** and **102** mm). The central member **12** has a substantially cylindrical shape as illustrated and may be contoured as desired by a user. Additionally, as illustrated in Figure **4**, the central member **12** may be formed of a an inner rigid core **18**, having one or more layers of padding or sheathing materials **20** thereover as is commonly known in the art.

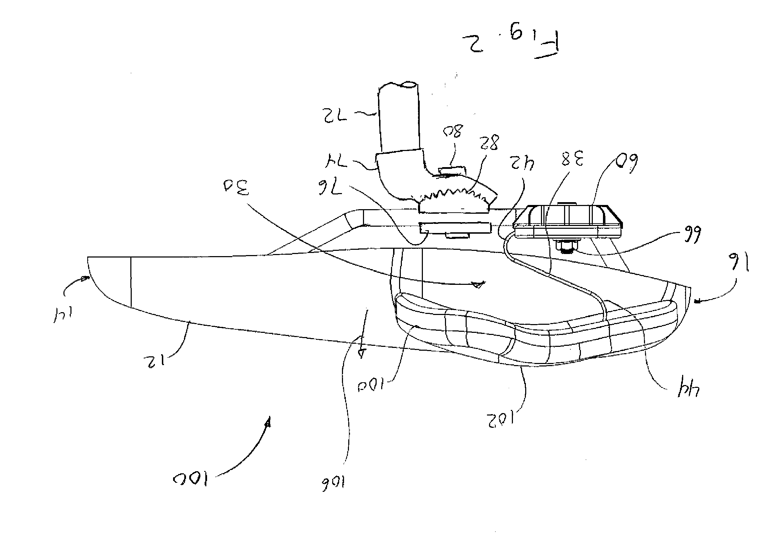

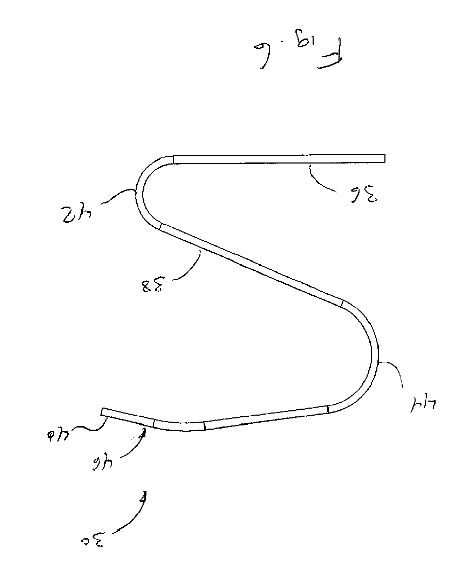

As illustrated in Figure **1**, with reference to the first side biased member each of the first and second side biased members **30** and **32** are formed to provide a top surface **34** proximate to one side of the central member **12**. In particular the first and second biased members **30** and **32** are positioned to be proximate to a rear portion **17** of the central member **12**. As illustrated in Figures **2** and **6**, the first and second biased members **30** and **32** may have an s-shape with a base portion **36**, a middle portion **38** and a top portion **40**. The base portion **36** and the middle portion **38** have a first bend **42** therebetween while the middle portion **38** and the top portion **40** have a second bend **44** therebetween. The top portion **40** includes a top surface **46** oriented in a substantially upward direction. The base portion **36** and middle portion **38** may be substantially planar while the top portion **40** has an arcuate shape the purpose of which will be more fully described below. As illustrated in Figure **1**, the top portion **40** may also include a leading edge **48** which may be square, rounded or any other desired shape.

Optionally, as illustrated in Figure **1**, the first and second side biased members **30** and **32** may include a padded member **100** located on the top thereof. The padded member **100** may be formed of any suitable material so as to provide cushioning to a user. The padded member includes a top surface **102** which may have a shape corresponding to the top portion **40**. Additionally the padded members **100** may have an outline **104** selected to provide adequate support for a user according to commonly known methods.

As illustrated in Figure **6**, the base portion, middle portion **38** and top portion may be formed of a continuous member which is bent in to the desired shape. In particular the first and second biased members **30** and **32** may each be formed of a strip of material such that the biased member has a substantially uniform width although non-uniform widths may also be used. The top portion **40** extends between inside and outside edges **50** and **52** and is selected to have a width between the first and second sides to be suitable to support one side of a user's buttocks. In particular, the width of the top portion **40** is selected to be between **1** and **3** inches (**25** and **76** mm). The first and second side biased members **30** and **32** may be formed of any suitable material, such as, by way of non-limiting example, steel, stainless steel, aluminium, composite materials or plastic, provided that such material has the required degree of strength to support the weight of a user as well as elastically deform by a desired amount. Optionally, the first and second biased members **30** and **32** may be covered by one or more layers of padding or sheathing materials thereover as is commonly known in the art where the padded members are omitted. The top portions **40** of the first and second side biased members **30** and **32** are spaced apart by a spacing distance **54** selected to position the first and second biased members below the tuberosity of the ischium or sits bones of a user. In particular the spacing distance **54** may be selected to be between **1** and **4** inches (**25** and **102**mm). Additionally, as illustrated in Figure **4**, the top of the top portions **40** is spaced above the central member by a riser distance generally indicated at **58**. The riser distance **58** is selected to ensure that the weight of the rider is supported by the first and second side biased members **30** and **32** and not the central portion **12**. In particular, the riser distance may be selected to be up to **0.4** inches (**13** mm).

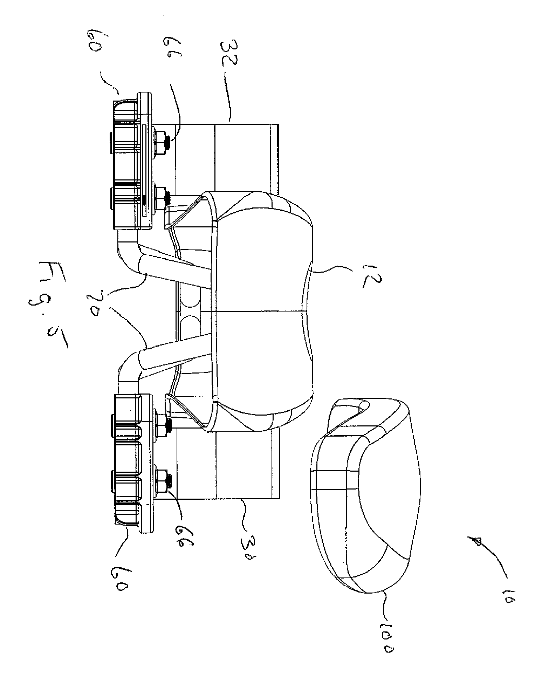

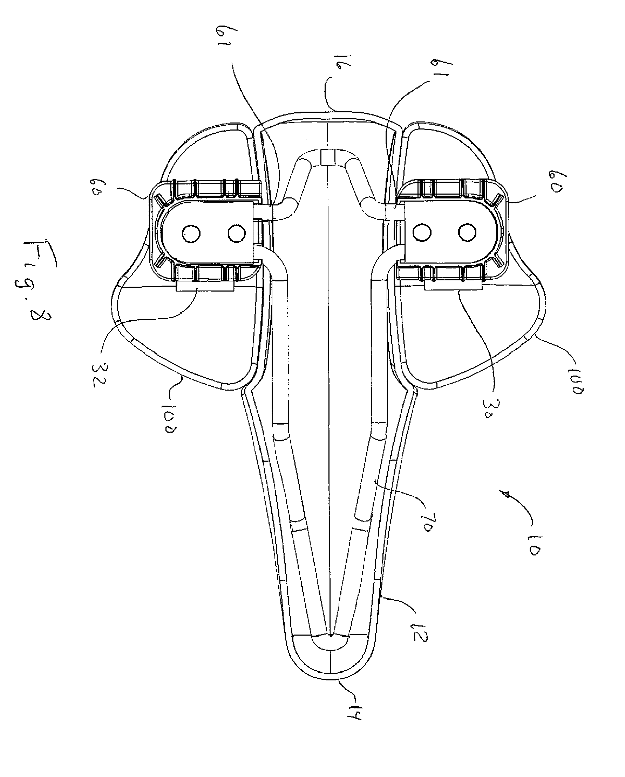

The first and second side biased members **30** and **32** are supported by a base members **60**. With reference to Figures **4****,** **5** and **8**, the base members **60** extends comprise bodies located to adjacent sides of the central member **12**. As illustrated in Figure **8** the base members are supported by side extension **61** in the seat rails **70** as further described below. Each base member **60** supports one of the first and second side biased members **30** or **32** thereupon. The first and second side portions **30** and **32** may be secured to the base members **60** by any suitable means, such as fasteners, such as bolts **66** as illustrated in figures **4** and **5**, adhesives welding or the like. Optionally, the base member **60** may have a plurality of mounting locations, such as a plurality of holes or a slot for securing the first and second side biased members **30** and **32** thereto at one of a plurality of locations to provide adjustability to a user. The base member **60** may be formed of any suitable material such as metal, composite materials or plastics provided such material provides sufficient strength to support the weight of a user upon the first and second side biased members **30** and **32**.

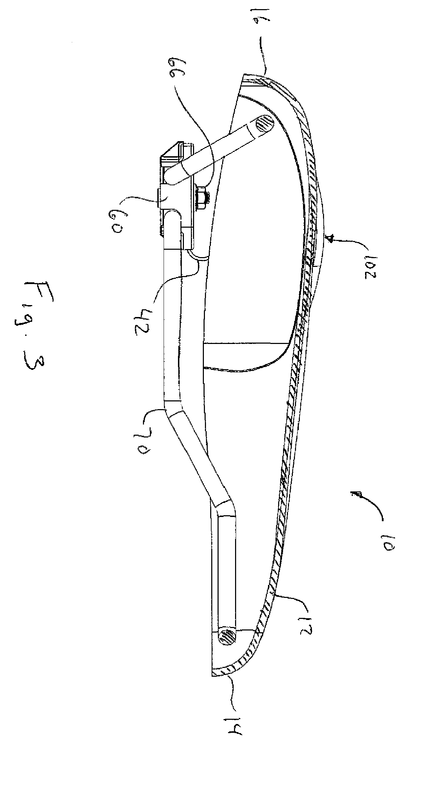

With reference to Figure **3**, the central member **12** may include at least one seat rail **70** extending along a bottom surface thereof. The seat rails **70** may be of a known type, such as a pair of parallel spaced apart rails as are commonly known. As illustrated in Figure 8, the seat rails 70 may include bowed side portions 62 extending away from each other to support the base members 60. With reference to Figure 2, a seat post **72** of the bicycle (not shown) may include a head portion **74** supporting top and bottom clamping members **76** and **78**, respectively, which are drawable towards each other by a fastener **80** or the like to clamp the seat rails 70 therebeteween. The clamping members **76** and **78** permit the seat rails and thereby the central member **12** and first and second side biased members **30** and **32** to be adjusted on the bicycle fore and aft. The bottom clamping member **78** may also include serrations **82** or other indexing means on the bottom surface thereof to permit the angle of the seat rails **70** to be adjusted.

In operation, a user (not shown) sits upon the apparatus 10 with their buttocks supported by each of the first and second side biased members 30 and 32 and the central member 12 therebetween. In such a manner, the central member 12 will be positioned towards the front of the bicycle (not shown) and be between the user's legs as they pedal. The weight of the user will cause the first and second side biased members 30 and 32 to be deformed in a downward direction generally indicated at 90 such that the first and second side biased members 30 and 32 exert a biasing force in an upward direction generally indicated at 106 in Figure 2. In particular, the front edge **48** of the top portion **40** will be deflected downward to a greater degree than a rear of the first or second side biased members **30** or **32** so as to angle the top portion **40** forward as illustrated. Thus when in use as a user's weight shifts forward, the first and second biased members **30** and **32** flex or roll forward creating a biasing force to the underside of a user's leg. Similarly, in an upright riding position the first and second biased members **30** and **32** are allowed to return to their starting position resulting in supporting the user's sit bones. Thus it will be observed that a user's comfort can be adjusted depending upon their riding style. The material, thickness and width of the first and second side biased members **30** and **32** are chosen to provide a desired degree of deflection under the weight of a user. It will be appreciated that this degree of deflection may be selected to correspond to the weight of the rider as well as their personal preferences.

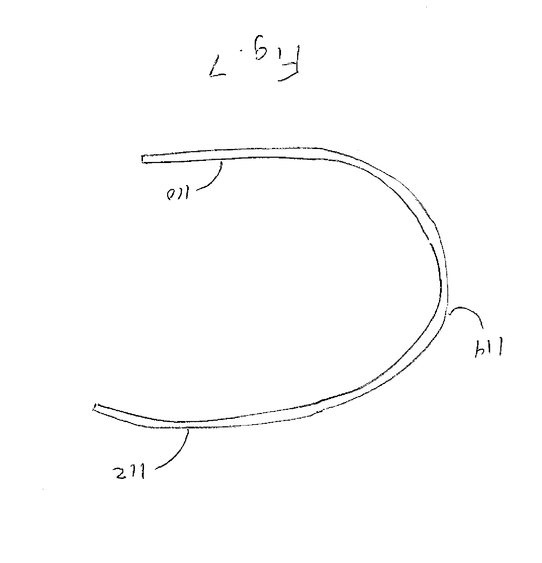

Turning now to Figure **7**, an alternative embodiment of the present invention is illustrated in which the first and second side biased members **30** and **32** has a c-shaped profile. In the embodiment illustrated in Figure 7, the first and second side biased members **30** and **32** are formed of a bottom portions **110**, a top portion **112** with a bend **114** therebetween. The c-shaped first and second side biased members **30** and **32** may be formed in a similar manner and have similar dimensions for the top member **112** as the top member **40** for the s-shaped embodiment above.

While specific embodiments of the invention have been described and illustrated, such embodiments should be considered illustrative of the invention only and not as limiting the invention as construed in accordance with the accompanying claims.

## Claims

1. An apparatus for supporting a bicycle rider comprising:
an elongate central member; and
first and second independently biased members each located to a lateral side of said central member.

2. The apparatus of claim **1** wherein said first and second biased members have a curved top surface.

3. The apparatus of claim **2** wherein said top surface of said first and second biased members is positioned higher than a top surface of said central member.

4. The apparatus of claim **2** wherein said first and second biased members have an s-shaped profile.

5. The apparatus of claim **2** wherein said first and second biased members have a c-shaped profile.

6. The apparatus of claim **1** wherein said first and second biased members are formed of a material selected from the group consisting of metal, carbon fibre or plastic.

7. The apparatus of claim **1** wherein said first and second biased members include a padded member on a top surface thereof.

8. The apparatus of claim **1** further comprising a base member for connecting said first and second biased members to said central member.

9. The apparatus of claim **8** wherein said base member comprises a transverse member.

10. The apparatus of claim **1** wherein said central member includes at least one connecting member extending along a bottom surface thereof, said at least one connecting member being selectably connectable to a bicycle post along a length of said at least one connecting member.

11. The apparatus of claim **10** wherein said at least one connecting member comprises a pair of spaced apart rods.

12. The apparatus of claim **1** wherein said central member has a width of between **1** and **4** inches.

13. The apparatus of claim **1** wherein said central member has a padded layer therearound.

14. A method for supporting a bicycle rider comprising:
providing an elongate central member; and
biasing first and second members to opposed lateral sides of said central member.
